# EUROPÄISCHE PATENTSCHRIFT

(11) **EP 2 651 722 B1**
(45) Veröffentlichungstag und Bekanntmachung des Hinweises auf die Patenterteilung: **03.06.2015**
(21) Anmeldenummer: 11778924.8
(22) Anmeldetag: 07.11.2011
(51) Int. Cl.: B60T 7/04, B60T 10/02, B60T 17/22, G05G 1/38

(54) **VERFAHREN ZUR ANSTEUERUNG EINES RETARDERS EINES KRAFTFAHRZEUGES**
METHOD FOR ACTUATING A RETARDER OF A MOTOR VEHICLE
PROCÉDÉ POUR COMMANDER UN RALENTISSEUR D'UN VÉHICULE AUTOMOBILE

(30) Priorität: 13.12.2010 DE 102010062947
(43) Veröffentlichungstag der Anmeldung: 23.10.2013
(73) Patentinhaber: ZF Friedrichshafen AG, 88038 Friedrichshafen (DE)
(72) Erfinder: HÖFLER, Hans, 88090 Immenstaad (DE); BRUGGER, Norbert, 88097 Eriskirch (DE)
(86) Internationale Anmeldenummer: PCT/EP2011/069552
(87) Internationale Veröffentlichungsnummer: WO 2012/079844

(56) Entgegenhaltungen:
- US-A1- 2007 276 582
- US-A1- 2008 042 489

## Beschreibung

Die Erfindung betrifft ein Retarderansteuerungsverfahren zur Ansteuerung eines Retarders eines Kraftfahrzeuges gemäß dem Oberbegriff des Patentanspruchs 1.

Retarder werden in Kraftfahrzeugen als zusätzliche verschleißfreie Dauerbremseinrichtungen zur Entlastung der als Reibungsbremsen ausgebildeten Rad- bzw. Betriebsbremsen eingesetzt. Insbesondere bei Fahrzeugen mit hohem Gesamtgewicht, bei Bremsvorgängen mit hoher Geschwindigkeit, beim Befahren von steilem Gefälle, bei schwierigen Fahrbahnverhältnissen auf abfallender Strecke mit häufigen Bremsvorgängen, und bei längeren Bergabfahrten verhindern Retarder den vorzeitigen Verschleiß sowie eine thermische Überlastung der Reibungsbremsen.

Im Wesentlichen werden elektrodynamische Retarder, bei denen ein Bremsmoment durch die Induktion von Wirbelströmen erzeugt wird, und hydrodynamische Retarder, bei denen ein Bremsmoment durch die Umwandlung von mechanischer in kinetische Energie erzeugt wird, verwendet. In Nutzfahrzeugen, wie beispielsweise knickgelengten Dumpern, Lastkraftwagen oder Bussen, werden häufig hydrodynamische Retarder eingesetzt.

Bei einem hydrodynamischen Retarder wird die mechanische Energie einer Antriebswelle in die kinetische Energie einer Flüssigkeit, in der Regel Öl, umgewandelt. Das physikalische Wirkprinzip entspricht dem einer hydrodynamischen Kupplung, die ein von einem Verbrennungsmotor angetriebenes Pumpenrad als Antrieb und ein Turbinenrad als Abtrieb aufweist, wobei die Turbine jedoch feststeht. Demnach weist ein hydrodynamischer Retarder einen sich im Leistungsfluss befindlichen Rotor und einen mit einem Retardergehäuse fest verbundenen Stator mit einer Beschaufelung auf.

Beim Betätigen des Retarders wird eine der gewünschten Bremsleistung entsprechende Ölmenge in den Retarderraum eingebracht. Der Ölfluss wird dabei beispielsweise über ein elektrisches Proportionalventil geregelt, dessen Magnet entsprechend bestromt wird. Im Retarderraum nimmt der sich drehende Rotor das Öl mit, das sich an den Statorschaufeln unter Umwandlung kinetischer Strömungsenergie in Wärme abstützt, wodurch eine Bremswirkung auf den Rotor und dessen antreibende Welle und damit eine Abbremsung des gesamten Fahrzeuges erzeugt wird. Das Öl wird zur Abkühlung über einen Wärmetauscher geleitet.

Das Bremsmoment hydrodynamischer Retarder wird üblicherweise dadurch eingestellt, dass im hydraulischen Retarderkreis ein entsprechender Druck eingestellt wird, der über eine Steuer- und Regeleinheit vorgegeben wird. Der Zusammenhang zwischen einer entsprechenden Stellgröße der Steuer- und Regeleinheit, beispielsweise einem Strom am Proportionalventil, und dem daraus resultierenden Bremsmoment, wird beispielsweise über ein Kennfeld hergestellt. Die Bremsleistung ist somit über ein Bedienelement, welches die Stromvorgabe für das Proportionalventil steuert, einstellbar.

Bei bekannten Kraftfahrzeugen sind die Bedienelemente zum Ansteuern des Retarders üblicherweise entweder als separate oder als am Bremspedal angebrachte stufenlose oder gestufte Sensoren bzw. Schalter ausgebildet. Die Dosierung des Retarder-Bremsmomentes erfolgt demnach vom Fahrer von Hand, beispielsweise über einen Lenkstockschalter, oder über den Bremsfuß.

Die EP 1 427 623 B1 zeigt beispielsweise eine Anordnung, bei der ein hydrodynamischer Retarder in Abhängigkeit von der jeweiligen Bremspedalposition gesteuert wird, wobei der Ölfluss durch den Retarder über ein Proportionalventil eingestellt wird. Dabei wird die Abweichung zwischen einer durch die Bremspedalposition signalisierten gewünschten Bremswirkung und einer ermittelten tatsächlich bereitgestellten Bremswirkung erfasst und gegebenenfalls durch ein entsprechendes Ansteuern des Proportionalventils korrigiert.

Die DE 198 27 604 B4 offenbart beispielsweise einen hydrodynamischen Retarder, bei dem eine Stufenregelung zur Einstellung des Bremsmomentes eines hydrodynamischen Retarders möglich ist.

Die DE 10 2008 034 974 A1 beschreibt beispielsweise ein Verfahren zur Bremsmomenteinstellung eines hydrodynamischen Retarders, bei dem eine manuelle Vorgabe der Höhe der Leistungsübertragung des Retarders mittels eines Wählhebels von Hand möglich ist. Das Verfahren eignet sich auch für eine automatische Vorgabe der Leistungsübertragung, beispielsweise mittels einer Geschwindigkeitsregelanlage.

Aus der DE 10 2007 018 153 A1 ist ein Verfahren bekannt, bei dem eine Sollgeschwindigkeitssteuerung eines Fahrzeuges im Schubbetrieb durch eine stufenlose Retardier- und/oder Motorbremsansteuerung erfolgt. Bei dem Verfahren wird beim Eintreten eines definierten Ereignisses, beispielsweise beim Loslassen des Fahrpedals, die momentane Fahrgeschwindigkeit konstant gehalten. Bei einer kurzen Betätigung des Bremspedals wird die Sollgeschwindigkeit um einen bestimmten Wert verringert. Bei einer längeren Betätigung des Bremspedals wird die Sollgeschwindigkeit weiter kontinuierlich verringert, bis das Bremspedal wieder freigegeben wird. Der Fahrer kann die Bremskraft wieder verringern und die Sollgeschwindigkeit erhöhen, indem er ein geeignetes Bedienelement betätigt. Dies kann beispielsweise das Fahrpedal sein, wobei dazu der Anfangsbereich des Pedalweges genutzt wird, in dem noch keine Drehmomentanforderung an den Motor erzeugt wird. Das Bedienelement kann auch das Bremspedal oder ein Bremshebel sein, wenn dieses entgegen der normalen Betätigungsrichtung in eine rückwärtige Richtung zurückziehbar ausgebildet ist. Die Regelung des Retarder-Bremsmomentes selbst erfolgt mittels einer elektronischen Steuerung, so dass die Sollgeschwindigkeit eingehalten wird, wobei der Retarder gegenüber der Betriebsbremse vorrangig eingesetzt und zusätzlich das Motorbremsmoment berücksichtigt wird.

Die US 2008/042489A1 und die US 2007/276582A1 offenbaren ein Retarderansteuerungsverfahren, bei welchem die Retarderansteuerung von der Bremspedalstellung abhängig ist.

Nachteilig an den bekannten Verfahren zur Retarderansteuerung ist, dass sie eine manuelle Dosierung des Bremsmomentes des Retarders nur entweder mit der Hand oder mit dem Bremsfuß über das Bremspedal erlauben. Das bekannte Verfahren zum Halten einer Sollgeschwindigkeit im Schub erfordert die Betätigung des Bremspedals um eine gewünschte Sollgeschwindigkeit zunächst einzustellen und gegebenenfalls die Betätigung eines weiteren Bedienelementes, oder zumindest eine eher ungewohnte Zurückziehbewegung eines entsprechend ausgebildeten Bremspedals; um die zuvor eingestellte Sollgeschwindigkeit ändern zu können. Der Bedienkomfort der bekannten Retarder zur Dosierung des Bremsmomentes ist daher für den Fahrer eher umständlich und somit nicht optimal.

Vor diesem Hintergrund liegt der Erfindung die Aufgabe zugrunde, ein Retarderansteuerungsverfahren für eine manuell bedienbare Ansteuerung eines Retarders im Schubbetrieb eines entsprechend ausgerüsteten Fahrzeuges vorzustellen, das komfortabel ist und einfach funktioniert.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass in einer Fahrsituation eines Fahrzeuges mit einem negativen Drehmoment des Antriebsmotors, d.h. im Schubbetrieb, der Grad des Gaswegnehmens des Fahrers als ein Maß für den Wunsch nach einem bestimmten Bremsmoment eines vorhandenen Retarders interpretiert werden kann. Diesem Fahrerwunsch entsprechend soll die Bremsleistung des Retarders über das Fahrpedal dosiert verstellt werden können.

Demnach geht die Erfindung aus von einem Verfahren zur Ansteuerung eines Retarders eines Kraftfahrzeuges, beispielsweise eines hydrodynamischen Retarders eines Nutzfahrzeuges, bei dem in einem Schubbetrieb mittels eines Bedienelementes eine fahrerseitige Anforderung einer Bremsleistung des Retarders erfolgt. Zur Lösung der gestellten Aufgabe sieht die Erfindung vor, dass das Fahrpedal des Kraftfahrzeuges als Bedienelement zur Anforderung der Bremsleistung des Retarders genutzt wird, und zwar derart, dass bei einem aufgrund des Schubbetriebes negativ werdenden Drehmoment des Antriebsmotors des Kraftfahrzeuges die Bremsleistungsanforderung durch ein zumindest teilweises Loslassen des Fahrpedals signalisiert wird.

Bei diesem Verfahren wird demnach das Fahr- bzw. Gaspedal im Schubbetrieb als Bedienelement des Retarders genutzt und die Dosierung des Retarders über die Fahrpedalauslenkung gesteuert. Dadurch wird vorteilhaft erreicht, dass die Bremsanforderung an den Retarder in logischer Weise beim Gaswegnehmen erfolgt, ohne dass die Handhabung eines separaten Schalters bzw. Hebels oder eine bestimmte Betätigung des Bremspedals erforderlich wäre. Die Bedienung des Retarders kommt somit ohne zusätzliche umständliche Aktionen des Fahrers aus und ist damit sehr einfach und komfortabel.

Demnach kann die Retardieransteuerung in einfacher Weise initiiert werden, indem ein Signal eines geeigneten Sensors im Bereich des Fahrpedals erfasst und genutzt wird, sobald das Drehmoment des Antriebsmotors negativ wird, der Antriebsmotor also in den Schubbetrieb übergeht, wenn der Fahrer vom Gas geht, d.h. das Fahrpedal in Loslassrichtung verstellt wird.

Insbesondere kann vorgesehen sein, dass das Retarder-Bremsmoment in Abhängigkeit der Fahrpedalstellung eingestellt wird, wobei die Verstellung vorteilhaft stufenlos erfolgen kann. Außerdem kann vorgesehen sein, dass bei einem vollständigen Loslassen des Fahrpedals das maximal verfügbare Retarder-Bremsmoment angefordert und in der Folge abgegeben wird, da in diesem Fall von einem hohen Bremsbedarf des Fahrzeugs und gegebenenfalls Entlastungsbedarf der Betriebsbremsen im Schubbetrieb ausgegangen werden kann. Mit teilweise losgelassenem Fahrpedal wird hingegen nur ein Teil des maximalen Retarder-Bremsmomentes angefordert und abgegeben. Nachdem beim Gaswegnehmen im Schubbetrieb der Retarder zugeschaltet ist, kann das Bremsmoment über das Fahrpedal stufenlos eingestellt werden, solange ein negatives Motormoment vorliegt. Beim Gasgeben, wenn sich das Vorzeichen des Motordrehmoments nach positiv ändert, wird der Retarder wieder abgeschaltet.

Bei einem hydrodynamischen Retarder kann die Fahrpedalstellung zur Stromvorgabe zur Steuerung eines Proportionalventils genutzt werden. Über das Proportionalventil kann in der eingangs beschriebenen Weise die Bremsleistung des Retarders eingestellt werden. Entsprechend der jeweiligen Fahrpedalstellung lässt sich somit eine stufenlose Verstellung des Retarder-Bremsmomentes eines hydrodynamischen Retarders darstellen.

Grundsätzlich ist das Verfahren jedoch auch mit Retardern anwendbar, die auf anderen Wirkprinzipien beruhen, wobei anstatt eines Proportionalventils ein entsprechendes Steuerelement in Abhängigkeit von der Fahrpedalstellung angesteuert wird.

Das erfindungsgemäße Verfahren kann besonders vorteilhaft mit einem an sich bekannten Elektronischen Fahrpedal-System (EGAS) kombiniert werden. Durch ein solches EGAS-System steht die jeweilige Fahrpedalstellung als Signal bereits auf einem Datenbus (CAN) zur Verfügung und kann für die stufenlose Verstellung des Retarder-Bremsmomentes über das Fahrpedal genutzt werden.

Außerdem kann vorgesehen sein, dass für die Retarader-Bremsmomenteinstellung nur ein Teilbereich des vorhandenen Fahrpedalstellweges verwendet wird. Dementsprechend kann eine obere Fahrpedalstellung als Zuschaltschwelle festgelegt sein, bei deren Unterschreiten die pedalwegabhängige Retarder-Bremsmomenteinstellung aktiviert wird. Eine untere Fahrpedalstellung kann als eine Maximalschwelle festgelegt sein, bei deren Unterschreiten ein Maxmalwert des Retarder-Bremsmomentes angefordert wird.

Demnach erfolgt das Zuschalten des Retarders erst ab einer bestimmten Fahrpedalstellung in Loslassrichtung, beispielsweise bei 40% des Fahrpedalweges. Unter einer bestimmten Fahrpedalstellung, d.h. bei annähernd vollständig losgelassenem Fahrpedal, beispielsweise bei 10% des Fahrpedalweges, wird stets das volle Retarder-Bremsmoment angesteuert. Die stufenlose Dosierung des Retarder-Bremsmomentes kann dann innerhalb des festgelegten Teilbereichs des Pedalwegs, also in dem Beispiel von 40% bis 10% Fahrpedalstellung genutzt werden. Bei einer anschließenden Betätigung des Fahrpedals in Motormomentanforderungsrichtung kann der zuvor eingeschaltete Retarder wieder abgeschaltet werden, wenn die Zuschaltschwelle überschritten wird, oder wenn die Umkehrung des zuvor negativen Motormomentes in ein positives Motormoment erkannt wird.

Weiterhin kann vorgesehen sein, dass für die Retarder-Bremsmomenteinstellung eine Vorwahl eines Maximalwertes des Retarder-Bremsmomentes berücksichtigt wird. Dadurch kann die erfindungsgemäße Einstellung mit einem an sich bekannten Vorwählschalter kombiniert werden, der ein maximal mögliches Retarder-Bremsmoment vorwählt, das anschließend über das Fahrpedal dosiert angesteuert werden kann.

Als ein Ausführungsbeispiel der Erfindung wird ein Szenario angenommen, bei dem ein mit einem Elektronischen Gaspedal (EGAS) und einem proportionalventilgesteuerten hydrodynamischen Retarder ausgerüsteter, von einem Verbrennungsmotor angetriebener, knickgelegter Dumper im Einsatz in ein Gefälle einfährt:
Der Fahrer geht vom Gas. Das Drehmoment des Antriebsmotors der Zugmaschine des Dumpers wird aufgrund des einsetzenden Schubes des Fahrzeuges negativ. Sobald das Motordrehmoment von einem geeigneten Steuergerät als negativ erkannt ist, wird das Signal des Fahrpedals bzw. der Fahrpedalstellung zur Ansteuerung des Retarders genutzt. Der Wert der jeweiligen aktuellen Fahrpedalstellung steht auf dem CAN-Bus des EGAS-Systems, welches ein Fahrpedalmodul einschließlich einer Sensorik zur Erfassung der Fahrpedalstellung, sowie ein Motorsteuergerät und eine elektrisch ansteuerbare Drosselvorrichtung des als Verbrennungsmotor ausgebildeten Antriebsmotors des Fahrzeuges umfasst, als Signal zur Verfügung.

Über die aktuelle Fahrpedalstellung bzw. das Fahrpedalsignal wird die Bestromung eines Magneten des elektrischen Proportionalventils mittels einer Steuer- und Regeleinheit so geregelt, dass ein bestimmter Ölfluss dem Retarderraum zugeführt wird. Dadurch entsteht in dem Retarderraum ein entsprechender Druck, wodurch ein bestimmtes Bremsmoment am Rotor des Retarders erzeugt wird, welches auf den Antriebsstrang des Fahrzeuges bzw. die angetriebenen Fahrzeugräder wirksam ist und in der Folge zu einem Abbremsen des Fahrzeuges führt. Der Zusammenhang zwischen der Fahrpedalstellung, dem Strom am Proportionalventil als Stellgröße der Steuer- und Regeleinheit und dem daraus resultierenden Bremsmoment ist in einem Kennfeld abgelegt. Zusätzlich ist als Randbedingung ein Teilbereich des Pedalweges mit einer Zuschaltschwelle und einer Maximalschwelle definiert.

Hat der Fahrer das Fahrpedal vollständig losgelassen, so wird das maximale Retardiermoment angefordert. Der Maximalwert kann durch einen gegebenenfalls vorhandenen Vorwählschalter vorab eingestellt sein. Hat der Fahrer das Fahrpedal teilweise losgelassen, so wird der Retarder ab einer Fahrpedalstellung von 40% des Pedalweges zugeschaltet. Bei einer Fahrpedalstellung von über 40% bliebe der Retarder abgeschaltet. Der Fahrer kann nun über das Fahrpedal das Retardiermoment quasi intuitiv stufenlos verstellen, um eine gewünschte resultierende Bremswirkung auf das Fahrzeug zu erzielen. Ist die Fahrpedalstellung bei 10% oder weniger des Pedalweges angelangt, so endet die Dosierung und das volle Retardiermoment wird angefordert. Eine Fahrpedalstellung von weniger als 10% des Pedalwegs wird also mit dem vollständigen Loslassen des Fahrpedals gleichgesetzt.

Betätigt der Fahrer das Fahrpedal, um das Fahrzeug zu beschleunigen bzw. um es weniger abzubremsen, beispielsweise bei abflachendem Gefälle, setzt die Dosierung des Retardiermomentes wieder ein. Dreht sich das Motordrehmoment um, wird es also positiv und das Fahrzeug geht in den Zugbetrieb über, oder wird die Zuschaltschwelle von 40% des Pedalweges in Richtung höherer Prozentwerte des Pedalweges überschritten, so endet die Dosierung des Retarder-Bremsmomentes und der Retarder wird abgeschaltet.

Über das Fahrpedal kann der Fahrer somit innerhalb des Pedalwegbereiches zwischen 40% und 10% des möglichen Pedalstellweges das Retardiermoment in Loslassrichtung vergrößern und in Betätigungsrichtung verringern, sowie beim Verlassen dieses Stellbereichs, je nach Pedalstellrichtung, den Retarder bedarfsweise voll zu- oder gänzlich abschalten und somit die Fahrt des Dumpers bei Schonung der Betriebsbremsen komfortabel und sicher im Schubbetrieb steuern.

## Patentansprüche

1. Retarderansteuerungsverfahren eines Kraftfahrzeuges, beispielsweise eines hydrodynamischen Retarders eines Nutzfahrzeuges, bei dem in einem Schubbetrieb mittels eines Bedienelementes eine fahrerseitige Anforderung einer Bremsleistung des Retarders erfolgt, **dadurch gekennzeichnet, dass** das Fahrpedal des Kraftfahrzeuges als Bedienelement zur Anforderung der Bremsleistung des Retarders genutzt wird, und zwar derart, dass bei einem aufgrund des Schubbetriebes negativ werdenden Drehmoment des Antriebsmotors des Kraftfahrzeuges die Bremsleistungsanforderung durch ein zumindest teilweises Loslassen des Fahrpedals signalisiert wird, wobei das Retarder-Bremsmoment in Abhängigkeit von der Fahrpedalstellung eingestellt wird.

2. Retarderansteuerungsverfahren nach Anspruch 1, **dadurch gekennzeichnet, dass** die Retarder-Bremsmomenteinstellung stufenlos erfolgt.

3. Retarderansteuerungsverfahren nach einem der Ansprüche 1 bis 2, **dadurch gekennzeichnet, dass** bei einem vollständigen Loslassen des Fahrpedals ein Maxmalwert des Retarder-Bremsmomentes und bei einem teilweise Loslassen des Fahrpedals ein Teil des maximal verfügbaren Retarder-Bremsmomentes angefordert wird.

4. Retarderansteuerungsverfahren nach einem der Ansprüche 1 bis 3, **dadurch gekennzeichnet, dass** die aktuelle Fahrpedalstellung mit Hilfe eines elektronischen Fahrpedal-Systems ermittelt wird.

5. Retarderansteuerungsverfahren nach einem der Ansprüche 1 bis 4, **dadurch gekennzeichnet, dass** für die Retarder-Bremsmomenteinstellung ein Teilbereich des vorhandenen Fahrpedalstellweges verwendet wird.

6. Retarderansteuerungsverfahren nach einem der Ansprüche 1 bis 5, **dadurch gekennzeichnet, dass** eine obere Fahrpedalstellung als Zuschaltschwelle festgelegt ist, bei deren Unterschreiten die pedalwegabhängige Retarder-Bremsmomenteinstellung aktiviert wird.

7. Retarderansteuerungsverfahren nach einem der Ansprüche 1 bis 6, **dadurch gekennzeichnet, dass** eine untere Fahrpedalstellung als Maximalschwelle festgelegt ist, bei deren Unterschreiten ein Maxmalwert des Retarder-Bremsmomentes angefordert wird.

8. Retarderansteuerungsverfahren nach einem der Ansprüche 1 bis 7, **dadurch gekennzeichnet, dass** bei einer Betätigung des Fahrpedals, bei der die Zuschaltschwelle überschritten wird, oder die eine Umkehrung des zuvor negativen Motormomentes in ein positives Motormoment zur Folge hat, der zuvor eingeschaltete Retarder wieder abgeschaltet wird.

9. Verfahren nach einem der Ansprüche 1 bis 8, **dadurch gekennzeichnet, dass** für die Retarder-Bremsmomenteinstellung eine Vorwahl eines Maximalwertes des Retarder-Bremsmomentes berücksichtigt wird.

## Claims

1. Method for actuating a retarder of a motor vehicle, for example a hydrodynamic retarder of a utility vehicle, in which in an overrun mode a driverside request for braking power of the retarder is made by means of an operator control element, **characterized in that** the accelerator pedal of the motor vehicle is used as an operator control element for requesting the braking power of the retarder, to be precise in such a way that when there is a torque of the drive motor of the motor vehicle which is becoming negative owing to the overrun mode the braking power request is signalled by at least partial release of the accelerator pedal, wherein the retarder braking torque is set as a function of the accelerator pedal position.

2. Method for actuating a retarder according to Claim 1, **characterized in that** the setting of the braking torque of the retarder is carried out in an infinitely variable fashion.

3. Method for actuating a retarder according to one of Claims 1 and 2, **characterized in that** when the accelerator pedal is released completely a maximum value of the braking torque of the retarder is requested, and when the accelerator pedal is released partially a portion of the maximum available braking torque of the retarder is requested.

4. Method for actuating a retarder according to one of Claims 1 to 3, **characterized in that** the current position of the accelerator pedal is determined using an electronic accelerator pedal system.

5. Method for actuating a retarder according to one of Claims 1 to 4, **characterized in that** a partial range of the accelerator pedal actuation travel which is present is used for setting the braking torque of the retarder.

6. Method for actuating a retarder according to one of Claims 1 to 5, **characterized in that** an upper position of the accelerator pedal is defined as an activation threshold, at the undershooting of which the pedal-travel-dependent setting of the braking torque of the retarder is activated.

7. Method for actuating a retarder according to one of Claims 1 to 6, **characterized in that** a lower position of the accelerator pedal is defined as a maximum threshold, at the undershooting of which a maximum value of the braking torque of the retarder is requested.

8. Method for actuating a retarder according to one of Claims 1 to 7, **characterized in that** in the event of activation of the accelerator pedal, during which the activation threshold is exceeded, or which results in reversal of the previously negative engine torque into a positive engine torque, the retarder which was previously switched on is switched off again.

9. Method according to one of Claims 1 to 8, **characterized in that** a pre-selection of a maximum value of the braking torque of the retarder is taken into account for the setting of the braking torque of the retarder.

## Revendications

1. Procédé de commande d'un ralentisseur d'un véhicule automobile, par exemple d'un ralentisseur hydrodynamique d'un véhicule utilitaire, dans lequel, pendant un fonctionnement en poussée, le conducteur effectue au moyen d'un élément d'actionnement une demande de puissance de freinage du ralentisseur, **caractérisé en ce que** la pédale d'accélérateur du véhicule automobile est utilisée en tant qu'élément d'actionnement pour demander la puissance de freinage du ralentisseur, de telle sorte que dans le cas d'un couple du moteur d'entraînement du véhicule automobile devenant négatif du fait du fonctionnement en poussée, la demande de puissance de freinage soit indiquée par un relâchement au moins partiel de la pédale d'accélérateur, le couple de freinage du ralentisseur étant ajusté en fonction de la position de la pédale d'accélérateur.

2. Procédé de commande d'un ralentisseur selon la revendication 1, **caractérisé en ce que** l'ajustement du couple de freinage du ralentisseur s'effectue de manière continue.

3. Procédé de commande d'un ralentisseur selon l'une quelconque des revendications 1 à 2, **caractérisé en ce que** dans le cas d'un relâchement complet de la pédale d'accélérateur, une valeur maximale du couple de freinage du ralentisseur est demandée, et dans le cas d'un relâchement partiel de la pédale d'accélérateur, une partie du couple de freinage maximum disponible du ralentisseur est demandée.

4. Procédé de commande d'un ralentisseur selon l'une quelconque des revendications 1 à 3, **caractérisé en ce que** la position de la pédale d'accélérateur actuelle est déterminée à l'aide d'un système de pédale d'accélérateur électronique.

5. Procédé de commande d'un ralentisseur selon l'une quelconque des revendications 1 à 4, **caractérisé en ce que** l'on utilise pour l'ajustement du couple de freinage du ralentisseur une plage partielle de la course existante de réglage de la pédale d'accélérateur.

6. Procédé de commande d'un ralentisseur selon l'une quelconque des revendications 1 à 5, **caractérisé en ce qu'**une position de pédale d'accélérateur supérieure est établie en tant que seuil d'enclenchement, en dessous duquel est activé l'ajustement du couple de freinage du ralentisseur dépendant de la course de la pédale.

7. Procédé de commande d'un ralentisseur selon l'une quelconque des revendications 1 à 6, **caractérisé en ce qu'**une position de pédale d'accélérateur inférieure est établie en tant que seuil maximum, en dessous duquel une valeur maximale du couple de freinage du ralentisseur est demandée.

8. Procédé de commande d'un ralentisseur selon l'une quelconque des revendications 1 à 7, **caractérisé en ce que** dans le cas d'un actionnement de la pédale d'accélérateur dans lequel le seuil d'enclenchement est dépassé ou qui entraîne une inversion du couple moteur préalablement négatif en un couple moteur positif, le ralentisseur préalablement enclenché est à nouveau déconnecté.

9. Procédé selon l'une quelconque des revendications 1 à 8, **caractérisé en ce que** pour l'ajustement du couple de freinage du ralentisseur, on tient compte d'une présélection d'une valeur maximale du couple de freinage du ralentisseur.
